# FASCICULE DE BREVET EUROPEEN

(11) **EP 0 690 115 B1**
(45) Date de publication et mention de la délivrance du brevet: **25.10.2000**
(21) Numéro de dépôt: 95401486.6
(22) Date de dépôt: 23.06.1995
(51) Int. Cl.: C09K 11/78, H01J 31/12

(54) **Utilisation d'un tantalate d'yttrium, de lutétium ou de gadolinium dopé en luminescence basse tension**
Verwendung eines dotierten Yttrium-, Lutetium-, oder Gadoliniumtantalates in Niederspannungslumineszenz
Use of doped yttrium, lutetium, or gadolinium tantalate in low voltage luminescence

(30) Priorité: 01.07.1994 FR 9408149
(43) Date de publication de la demande: 03.01.1996
(73) Titulaire: RHODIA CHIMIE, 92408 Courbevoie Cédex (FR)
(72) Inventeur: Huguenin, Denis, F-92600 Asnières-sur-Seine (FR)
(74) Mandataire: Dubruc, Philippe

(56) Documents cités:
- DATABASE WPI Section Ch, Week 8247 Derwent Publications Ltd., London, GB; Class L03, AN 82-01258J & JP-A-57 168 982 (NIPPON ELECTRIC KK) , 18 Octobre 1982
- CHEMICAL ABSTRACTS, vol. 116, no. 18, 4 Mai 1992 Columbus, Ohio, US; abstract no. 185250, T.MINAMIDANI & AL 'luminescence and electrical properties...' & KIDORUI, vol. 18, 1991 pages 104-105,

## Description

La présente invention concerne l'utilisation nouvelle de tantalates dopé comme luminophore dans la luminescence basse tension.

On sait dans le domaine de l'électronique que les tubes cathodiques fonctionnent en utilisant une énergie importante de l'ordre de 30000V. On souhaite par ailleurs dans ce type d'application utiliser des électrons à basse énergie, c'est à dire de l'ordre de 200 à 800V. C'est le cas des écrans avec effet de champ (FED : field emission display). Dans ce type de matériel, ce sont des micropointes métalliques qui émettent les électrons de basse énergie qui vont exciter un matériau luminophore placé sur l'écran.

Ce matériau luminophore doit présenter deux propriétés essentielles.

Il doit avoir tout d'abord des caractéristiques optiques suffisantes, il s'agit ici de ses propriétés de luminescence, il doit émettre d'une manière efficace dans la couleur recherchée.

L'autre propriété nécessaire est la conductivité électrique. Le matériau doit en effet pouvoir évacuer les charges lorsqu'il est utilisé dans l'application mentionnée ci-dessus.

Le problème réside dans la difficulté d'avoir un matériau réunissant ces deux propriétés à un niveau suffisant. En effet, l'efficacité lumineuse du matériau décroît avec le potentiel d'excitation. En outre, il existe un potentiel minimum d'excitation (Vamin) en deçà duquel le matériau ne présente plus de conductivité. Comme on cherche à utiliser une gamme de potentiel la plus basse possible, de l'ordre de 200 à 800V comme indiqué plus haut, on a donc besoin d'un matériau présentant un Vamin le plus bas possible tout en conservant une efficacité lumineuse suffisante.

Le problème qui se pose apparaît donc comme la recherche d'un matériau présentant conjointement une efficacité lumineuse et une conductivité suffisantes dans une gamme de tension correspondant à l'application recherchée (200 - 800V).

L'objet de l'invention est donc la recherche de produits présentant de telles caractéristiques.

Dans ce but, l'invention concerne l'utilisation à titre de luminophore dans la fabrication de dispositifs mettant en oeuvre une luminescence basse tension d'un tantalate d'yttrium, de lutécium ou de gadolinium dopé.

On s'est aperçu en effet que les tantalates du type mentionné ci-dessus étaient bien adaptés à une telle utilisation, utilisation dans laquelle ils sont soumis à un rayonnement d'électrons à basse énergie, c'est à dire de l'ordre d'environ au moins 200V et d'au plus environ 800V.

D'autres caractéristiques, détails et avantages de l'invention apparaîtront encore plus complètement à la lecture de la description qui va suivre.

Les tantalates utilisés dans le cadre de la présente invention sont des tantalates d'yttrium, de lutécium ou de gadolinium. En outre, ce sont des tantalates dopés. Le dopage peut se faire par substitution partielle soit sur l'atome de tantale, soit sur l'atome d'yttrium, de lutécium ou de gadolinium.

Comme dopant substituant du tantale, on peut mentionner les éléments pentavalents comme par exemple le niobium.

Par ailleurs, comme dopant substituant de l'yttrium, du lutécium ou du gadolinium on peut utiliser une terre rare luminescente dans le visible. Elle peut être choisie dans le groupe comprenant le praséodyme, l'europium, le terbium et le thulium.

En outre, l'invention s'applique aussi à l'utilisation de tantalates mixtes dopés comprenant dans leur composition du tantale éventuellement dopé et, outre l'yttrium, le lutécium ou le gadolinium, au moins un autre élément choisi parmi ces trois éléments précités ainsi que le lanthane et l'europium et éventuellement au moins un élément dopant qui peut être choisi plus particulièrement parmi les terres rares luminescentes dans le visible. On peut citer comme exemple les tantalates mixtes d'yttrium - lutécium.

La teneur en élément dopant et notamment en terre rare luminescente dans le visible est généralement d'au plus 20% et plus particulièrement d'au plus 15%.

On utilise de préférence les produits présentant une structure monoclinique M'.

A titre d'exemples, on donne ci-dessous un certain nombre de tantalates utilisables dans le cadre de la présente invention.

Comme luminophores bleus, on peut citer ceux de formule (1) YNbₓTa₁₋ₓO₄, x étant supérieur à 0 et au plus égal à 0,15; ceux de formule (2) LuNbₓTa₁₋ₓO₄, x étant supérieur à 0 et au plus égal à 0,2; ceux de formule (3) Y_{1-y}Tm_{y}TaO₄, y étant supérieur à 0 et au plus égal à 0,03; on peut envisager aussi les solution solides des produits de formules (1) et (2) ou (1) et (3).

Comme luminophores verts, on peut citer ceux de formule (4) Y_{1-y}Tb_{y}TaO₄, y étant au moins égal à 0,001 et au plus égal à 0,15; ceux de formule (5) Lu_{1-y}Tb_{y}TaO₄, y étant au moins égal à 0,001 et au plus égal à 0,15; ceux de formule (6) Gd_{1-y}Tb_{y}TaO₄, y étant au moins égal à 0,001 et au plus égal à 0,15; ainsi que les solutions solides d'au moins deux des trois produits des formules (4) à (6).

De préférence, les produits présentent une taille moyenne de particules d'au plus 15µm, de préférence d'au plus 5µm (Granulométrie CILAS).

Les produits sont préparés par des procédés bien connus qui ne font pas l'objet de l'invention. Habituellement on procède par chamottage des oxydes des éléments rentrant dans la composition des produits en présence éventuellement d'un flux comprenant un alcalin comme le lithium ou un alcalino-terreux comme le baryum.

L'invention concerne aussi les dispositifs mettant en oeuvre une luminescence basse tension et qui sont caractérisés en ce qu'ils comprennent un tantalate d'yttrium, de lutécium ou de gadolinium dopé du type décrit ci-dessus.

Tout ce qui a été décrit plus haut au sujet de l'utilisation des tantalates s'applique par conséquent aux dispositifs de l'invention.

Dans ces dispositifs, les tantalates sont disposés sur les écrans soumis à l'excitation de basse énergie. Cette mise en oeuvre des luminophores dans la fabrication des dispositifs à luminescence basse tension se fait aussi selon des techniques bien connus par exemple par dépôts sur les écrans par sérigraphie, sédimentation ou électrophorèse.

L'invention s'applique plus particulièrement aux dispositifs comprenant un écran avec effet de champ.

Des exemples vont maintenant être donnés.

En ce qui concerne les propriétés de luminescence des produits qui sont données ci-dessous, celles-ci sont mesurées par cathodoluminescence basse tension du produit déposé par sédimentation sans liant sur un substrat transparent dans des conditions d'excitation de 1µA/mm² en courant continu. L'épaisseur de la couche de produit sur le substrat est de 10µm.

### EXEMPLE 1

On utilise un tantalate d'yttrium comprenant du niobium de taille moyenne de 10µm et de formule YTa_{0,99}Nb_{0,01}O₄.

Le produit émet une luminescence bleue. Il présente une efficacité lumineuse de 0,2Lm/W à 400V et un Vamin inférieur à 200V.

### EXEMPLE 2

On utilise un tantalate de lutécium de formule LuTa_{0,99}Nb_{0,01}O₄. Il présente une efficacité lumineuse de 0,12Lm/W à 400V et un Vamin inférieur à 200V. Ses coordonnées colorimétriques sont x=0,146 et y=0,069. Sa taille moyenne est de 5µm.

## Revendications

1. Utilisation à titre de luminophore dans la fabrication de dispositifs mettant en oeuvre une luminescence basse tension en utilisant des électrons de basse énergie située entre 200 et 800V, d'un tantalate d'yttrium, de lutécium ou de gadolinium dopé.

2. Utilisation selon la revendication 1, dans laquelle le tantalate utilisé est dopé par substitution partielle du tantale par du niobium.

3. Utilisation selon la revendication 1, dans laquelle le tantalate utilisé est dopé par substitution partielle de l'yttrium, du lutécium ou du gadolinium par une terre rare luminescente dans le visible.

4. Utilisation selon la revendication 3, dans laquelle la terre rare luminescente dans le visible appartient au groupe comprenant le praséodyme, l'europium, le terbium et le thulium.

5. Utilisation selon l'une des revendications précédentes d'un tantalate mixte dopé comprenant dans sa composition du tantale éventuellement dopé et, outre l'yttrium, le lutécium ou le gadolinium, au moins un autre élément choisi parmi ces trois éléments précités ainsi que le lanthane et l'europium et éventuellement au moins un élément dopant qui peut être choisi plus particulièrement parmi les terres rares luminescentes dans le visible.

6. Dispositif mettant en oeuvre une luminescence basse tension en utilisant des électrons de basse énergie située entre 200 et 800V, caractérisé en ce qu'il comprend un tantalate d'yttrium, de lutécium ou de gadolinium dopé.

7. Dispositif selon la revendication 6, caractérisé en ce qu'il comprend un tantalate dans lequel le tantalate utilisé est dopé par substitution partielle du tantale par du niobium.

8. Dispositif selon la revendication 6 ou 7, caractérisé en ce qu'il comprend un tantalate mixte dopé comprenant dans sa composition du tantale éventuellement dopé et, outre l'yttrium, le lutécium ou le gadolinium, au moins un autre élément choisi parmi ces trois éléments précités ainsi que le lanthane et l'europium et éventuellement au moins un élément dopant qui peut être choisi plus particulièrement parmi les terres rares luminescentes dans le visible.

9. Dispositif selon l'une des revendications 6 à 8, caractérisé en ce qu'il comprend un écran avec effet de champ.

## Patentansprüche

1. Verwendung eines dotierten Yttrium-, Lutetium- oder Gadoliniumtantalats als Luminophor bei der Herstellung von Vorrichtungen, die eine Niederspannungslumineszenz unter Verwendung von Elektronen niedriger Energie, die zwischen 200 und 800 V liegt, einsetzen.

2. Verwendung nach Anspruch 1, bei der das verwendete Tantalat durch teilweise Substitution des Tantals durch Niob dotiert ist.

3. Verwendung nach Anspruch 1, bei der das verwendete Tantalat durch teilweise Substitution von Yttrium, Lutetium oder Gadolinium durch eine im sichtbaren Bereich lumineszierende seltene Erde substituiert ist.

4. Verwendung nach Anspruch 3, bei der die im sichtbaren Bereich lumineszierende seltene Erde zu der Gruppe, umfassend Praseodym, Europium, Terbium und Thulium, gehört.

5. Verwendung eines gemischten dotierten Tantalats nach einem der vorangegangenen Ansprüche, wobei das Tantalat in seiner Zusammensetzung gegebenenfalls dotiertes Tantal und außer Yttrium, Lutetium oder Gadolinium mindestens ein anderes Element umfaßt, das unter diesen drei vorstehend erwähnten Elementen wie auch Lanthan und Europium und gegebenenfalls mindestens einem Dotierungselement, das insbesondere unter den im sichtbaren Bereich lumineszierenden seltenen Erden ausgewählt sein kann, ausgewählt ist.

6. Vorrichtung, die eine Niederspannungslumineszenz unter Verwendung von Elektronen niedriger Energie, die zwischen 200 und 800 V liegt, einsetzt, dadurch gekennzeichnet, daß sie ein dotiertes Yttrium-, Lutetium- oder Gadoliniumtantalat umfaßt.

7. Vorrichtung nach Anspruch 6, dadurch gekennzeichnet, daß sie ein Tantalat umfaßt, in dem das verwendete Tantalat durch teilweise Substitution des Tantals durch Niob dotiert ist.

8. Vorrichtung nach Anspruch 6 oder 7, dadurch gekennzeichnet, daß sie ein gemischtes dotiertes Tantalat umfaßt, das in seiner Zusammensetzung gegebenenfalls dotiertes Tantal und außer Yttrium, Lutetium oder Gadolinium mindestens ein anderes Element umfaßt, das unter diesen drei vorstehend erwähnten Elementen wie auch Lanthan und Europium und gegebenenfalls mindestens einem Dotierungselement, das insbesondere unter den im sichtbaren Bereich lumineszierenden seltenen Erden ausgewählt sein kann, ausgewählt ist.

9. Vorrichtung nach einem der Ansprüche 6 bis 8, dadurch gekennzeichnet, daß sie einen Schirm mit Feldeffekt umfaßt.

## Claims

1. Use as a luminophore in the production of apparatuses using low-voltage luminescence employing electrons with low energy in the range 200 to 800 V, of a doped tantalate of yttrium, lutetium or gadolinium.

2. Use according to claim 1 wherein the tantalate used is doped by partial substitution of the tantalum by niobium.

3. Use according to claim 1 wherein the tantalate used is doped by partial substitution of the yttrium, lutetium or gadolinium by a rare earth which is luminescent in the visible range.

4. Use according to claim 3 wherein the rare earth which is luminescent in the visible range belongs to the group comprising praseodynium, europium, terbium and thulium.

5. Use according to one of the preceding claims of a doped mixed tantalate comprising in its composition tantalum which is possibly doped and, besides yttrium, lutetium or gadolinium, at least one other element selected from said three elements as well as lanthanum and europium and possibly at least one doping element which can be selected more particularly from rare earths which are luminescent in the visible range.

6. Apparatus using low-voltage luminescence employing electrons with low energy in the range 200 to 800 V, characterized in that it comprises a doped tantalate of yttrium, lutetium or gadolinium.

7. Apparatus according to claim 6 characterized in that it comprises a tantalate in which the tantalate used is doped by partial substitution of the tantalum by niobium.

8. Apparatus according to claim 6 or claim 7 characterized in that it comprises a doped mixed tantalate comprising in its composition tantalum which is possibly doped and, besides yttrium, lutetium or gadolinium, at least one other element selected from said three elements as well as lanthanum and europium and possibly at least one doping element which can be selected more particularly from rare earths which are luminescent in the visible range.

9. Apparatus according to one of claims 6 to 8 characterized in that it comprises a field emission display screen.
